# EUROPÄISCHE PATENTSCHRIFT

(11) **EP 3 921 537 B1**
(45) Veröffentlichungstag und Bekanntmachung des Hinweises auf die Patenterteilung: **06.03.2024**
(21) Anmeldenummer: 19704314.4
(22) Anmeldetag: 08.02.2019
(51) Int. Cl.: F03B 17/06, F03B 13/26

(54) **WASSERKRAFTANLAGE**
HYDROELECTRIC POWER PLANT
CENTRALE HYDROÉLECTRIQUE

(43) Veröffentlichungstag der Anmeldung: 15.12.2021
(73) Patentinhaber: SKLIVANOS, Stefanos, 81547 München (DE)
(72) Erfinder: SKLIVANOS, Georgios, 81541 München (DE); SKLIVANOS, Stefanos, 81547 München (DE)
(74) Vertreter: Lambsdorff & Lange Patentanwälte Partnerschaft mbB
(86) Internationale Anmeldenummer: PCT/EP2019/053159
(87) Internationale Veröffentlichungsnummer: WO 2020/160786

(56) Entgegenhaltungen:
- WO-A1-2013/035930
- ES-A1- 2 274 679
- US-A- 327 888
- US-A- 4 163 905
- US-A- 4 186 314

## Beschreibung

Die Erfindung betrifft eine Wasserkraftanlage zur Nutzung einer Wasserströmung sowie ein Verfahren zur Erzeugung einer Rotationsbewegung aus strömendem Wasser.

Die Energienutzung von Wasserströmungen mit geringen Fließgeschwindigkeiten hat in jüngster Zeit an Bedeutung gewonnen, da sie für die zukünftige weltweite Energieversorgung in Zeiten steigender Energiekosten und knapp werdender Primärenergiequellen ein erhebliches Potential darstellt. Bekannt ist eine Vielzahl innovativer Technologien, mittels welchen elektrische Energie aus aufgestauten oder frei fließenden Gewässern bezogen werden kann. Neben Flusskraftwerken, die auf dem klassischen Prinzip der Schiffs- oder Flussmühlen basieren, wurden in jüngster Zeit Wasserkraftanlagen entwickelt, die in Art einer Turbine mit einer Rotationsachse in Längsrichtung zur Wasserströmung in das Fließgewässer eingetaucht werden.

Viele dieser Wasserkraftanlagen weisen jedoch einen eingeschränkten Anwendungsbereich oder eine schlechte Energieeffizienz auf. Die Skalierbarkeit an unterschiedliche Flussbreiten und Flusstiefen ist oftmals nicht gegeben. Ferner begrenzen Anforderungen wie Fischdurchgängigkeit, Robustheit, störende Sichtbarkeit der Anlage oberhalb der Wasseroberfläche, Funktionsfähigkeit bei Strömungsrichtungswechsel usw., den Einsatzbereich vieler bekannter Wasserkraftanlagen.

ES 2 274 679 A1 beschreibt eine Wasserkraftanlage, die eine umlaufende Schaufelreihe aufweist. Die Schaufeln sind an ihrem inneren Rand und an ihrem äußeren Rand jeweils von einer Führung geführt, wobei die am äußeren Schaufelrand ansetzende Führung unterbrochen ist.

Eine der Erfindung zugrundeliegende Aufgabenstellung kann darin gesehen werden, eine Wasserkraftanlage zur Nutzung einer Wasserströmung zu schaffen, die ein breites Anwendungsspektrum hat und gleichzeitig eine hohe Energieeffizienz aufweist. Ferner zielt die Erfindung darauf ab, ein Verfahren zur Erzeugung einer Rotationsbewegung aus einer Wasserströmung anzugeben, das die genannten Vorzüge ebenfalls ermöglicht.

Die Erfindung wird durch die Merkmale der unabhängigen Ansprüche gelöst. Weiterbildungen und Ausführungsbeispiele der Erfindung sind in den abhängigen Ansprüchen angegeben.

Demnach kann eine erfindungsgemäße Wasserkraftanlage ein endloses Laufband aufweisen, an welchem eine Vielzahl von Schaufeln umklappbar an ihrem inneren Rand angebracht ist. Das Laufband ist um wenigstens zwei Umlenkstellen geführt, derart, dass zwei sich im Betrieb gegenläufig bewegende Schaufelreihen vorhanden sind. Dabei sind die Schaufeln wenigstens einer der beiden Schaufelreihen zur Richtung der Wasserströmung geneigt orientiert. An den Umlenkstellen erfolgt ein Umklappen der Schaufeln von einer ersten Schaufelstellung in eine zweite Schaufelstellung bzw. von der zweiten Schaufelstellung zurück in die erste Schaufelstellung. Die Wasserkraftanlage weist ferner einen Führungsmechanismus in Form einer geschlossenen umlaufenden Führung auf, der die Schaufeln an ihrem äußeren Rand führt, wobei das Umklappen der Schaufeln an den Umlenkstellen durch den Führungsmechanismus bewerkstelligt wird.

Durch die zwei sich in Betrieb gegenläufig bewegenden Schaufelreihen kann eine optimale Ausnutzung der Energie der Wasserströmung erzielt werden. Einerseits wird durch die mindestens zwei Schaufelreihen die kinetische Energie des Wassers auf eine "doppelte" Anzahl von Wirkflächen übertragen. Andererseits kann durch die zustromseitige (d.h. strömungseintrittsseitige) Schaufelreihe eine gezielte Umlenkung der Wasserströmung zur Wirkungsgradoptimierung auf die zweite Schaufelreihe vorgenommen werden. Dadurch kann die Anlage auch bei kleinen Fließgeschwindigkeiten mit hohem Wirkungsrad arbeiten.

Bauartbedingt ist die Anlage in ihrer Höhe und Breite weitgehend frei dimensionierbar, so dass sie für eine Vielzahl unterschiedlichster Fließgewässer (Flüsse, Bäche, Kanäle, Gezeitenströmungen usw.) zum Einsatz kommen kann. Aufgrund der unabhängigen Skalierbarkeit in Höhe und Breite lassen sich große Strömungsquerschnitte auch in flachen Gewässern ausnutzen, ohne dass Teile der Anlage über die Wasseroberfläche hinausragen müssen.

Durch eine geeignete geometrische Auslegung des Führungsmechanismus kann erreicht werden, dass die Schaufeln selbsttätig - d.h. ohne zusätzliche Betätigung allein durch ihre vom Laufband bestimmte Bewegung - an den Umlenkstellen umgeklappt werden.

Der Führungsmechanismus kann benachbart einer ersten Umlenkstelle ein Zurückklappen der Schaufeln entgegen der Laufrichtung des Laufbandes bewirken und benachbart einer zweiten Umlenkstelle ein Vorklappen der Schaufeln in Laufrichtung des Laufbandes bewirken.

Der Führungsmechanismus kann beispielsweise in Form einer Kulissenführung oder einer Führungsschiene ausgebildet sein.

Eine vorteilhafte Ausgestaltung der Wasserkraftanlage kennzeichnet sich dadurch, dass die Schaufeln der zustromseitigen Schaufelreihe in einem Anstellwinkel von etwa 45° zur Wasserströmung orientiert sind. Dadurch wird die kinetische Energie der Wasserströmung mit maximaler Effizienz in eine Bewegung des Laufbandes umgesetzt. Darüber hinaus kann vorgesehen sein, dass die Schaufeln der abstromseitigen (d.h. strömungsaustrittsseitigen) Schaufelreihe in einem Winkel von etwa 90° gegenüber den Schaufeln der eintrittsseitigen Schaufelreihe orientiert sind. Dieser Anstellwinkel der Schaufeln der abstromseitigen Schaufelreihe bewirkt ebenfalls eine optimale Energieumsetzung, da die von den Schaufeln der zustromseitigen Schaufelreihe umgelenkte Wasserströmung nun im Wesentlichen mit vollem Schub (d.h. unter einem im wesentlichen rechten Winkel) auf die Schaufeln der abstromseitigen Schaufelreihe prallt.

Die Schaufeln können plattenförmig (d.h. eben) oder gekrümmt, insbesondere halbzylinderförmig, ausgebildet sein.

Das Laufband kann wenigstens zwei umlaufende Ketten aufweisen, welche um Kettenräder an den Umlenkstellen umgelenkt werden. An den umlaufenden Ketten können die Schaufeln umklappbar verankert sein.

Die Wasserkraftanlage kann einen Generator zur Stromerzeugung aufweisen, der von einer Bewegung des Laufbandes angetrieben wird. Beispielsweise kann eine Rotorwelle des Generators mit einer Welle einer Umlenkstelle drehgekoppelt sein. Es ist möglich, dass die Bewegung des Laufbandes getriebefrei auf die Rotorwelle des Generators übertragen wird.

Gemäß einem weiteren Aspekt weist eine erfindungsgemäße Wasserkraftanlage zur Nutzung einer Wasserströmung ein endloses Laufband auf, an welchem eine Vielzahl von Schaufeln umklappbar angebracht ist. Ferner weist die Wasserkraftanlage mindestens zwei Umlenkstellen auf, um die das Laufband geführt ist, derart, dass zwei sich im Betrieb gegenläufig bewegende Schaufelreihen vorhanden sind, wobei die Schaufeln wenigstens einer der beiden Schaufelreihen zur Richtung der Wasserströmung geneigt orientiert sind, und wobei an den Umlenkstellen ein Umklappen der Schaufeln von einer ersten Schaufelstellung in eine zweite Schaufelstellung bzw. von der zweiten Schaufelstellung zurück in die erste Schaufelstellung erfolgt. Die Wasserkraftanlage weist einen Führungsmechanismus in Form einer einzigen umlaufenden Führung auf, die geschlossen ist und die Schaufeln an ihrem äußeren laufbandfernen Bereich, insbesondere äußeren Rand führt, wobei das Umklappen der Schaufeln an den Umlenkstellen durch die geschlossen umlaufende Führung bewerkstelligt wird.

Ein Verfahren zur Erzeugung einer Rotationsbewegung aus einer Wasserströmung umfasst das Anströmen eines endlosen Laufbandes, an welchem eine Vielzahl von Schaufeln umklappbar an ihrem inneren Rand angebracht ist. Das Laufband ist um mindestens zwei Umlenkstellen geführt, derart, dass sich eine zustromseitige Schaufelreihe in eine quer zur Wasserströmung verlaufende Richtung bewegt und sich eine abstromseitige Schaufelreihe gegenläufig zur zustromseitigen Schaufelreihe bewegt. Dabei sind die Schaufeln wenigstens einer der beiden Schaufelreihen zur Richtung der Wasserströmung geneigt orientiert, wobei an den Umlenkstellen ein Umklappen der Schaufeln von einer ersten Schaufelstellung in eine zweite Schaufelstellung bzw. von der zweiten Schaufelstellung zurück in die erste Schaufelstellung erfolgt, wobei das Umklappen der Schaufeln an den Umlenkstellen durch eine Führung der Schaufeln an ihrem äußeren Rand durch einen Führungsmechanismus in Form einer geschlossenen umlaufenden Führung bewerkstelligt wird. Das Verfahren umfasst ferner das Umsetzen der Laufbandbewegung in eine Rotationsbewegung.

Ein weiteres Verfahren zur Erzeugung einer Rotationsbewegung aus einer Wasserströmung umfasst ein Anströmen eines endlosen Laufbands, an welchem eine Vielzahl von Schaufeln umklappbar angebracht ist, von der Wasserströmung. Dabei ist das Laufband um mindestens zwei Umlenkstellen geführt, derart, dass sich eine zustromseitige Schaufelreihe in eine quer zur Wasserströmung verlaufende Richtung bewegt und sich eine abstromseitige Schaufelreihe gegenläufig zur zustromseitigen Schaufelreihe bewegt. Die Schaufeln wenigstens einer der beiden Schaufelreihen sind zur Richtung der Wasserströmung geneigt orientiert. An den Umlenkstellen erfolgt ein Umklappen der Schaufeln von einer ersten Schaufelstellung in eine zweite Schaufelstellung bzw. von der zweiten Schaufelstellung zurück in die erste Schaufelstellung, wobei das Umklappen der Schaufeln an den Umlenkstellen durch einen Führungsmechanismus in Form einer einzigen umlaufenden Führung bewerkstelligt wird, die geschlossen ist und die Schaufeln an ihrem äußeren laufbandfernen Bereich, insbesondere äußeren Rand führt. Das Verfahren umfasst ferner das Umsetzen der Laufbandbewegung in eine Rotationsbewegung.

Die Verfahren ermöglichen eine hocheffiziente Ausnutzung der kinetischen Energie einer Wasserströmung, insbesondere bei kleinen Fließgeschwindigkeiten. Darüber hinaus ermöglichen die zwei Schaufelreihen in Verbindung mit dem Umklappprozess der Schaufeln an den Umlenkstellen ein Funktionieren der Anlage auch bei einem Wechsel der Wasserströmungsrichtung, d.h. bei Hin- und Rückströmung, wie sie beispielsweise von einer Gezeitenströmung (Tiden) erzeugt wird.

Ausführungsformen und Ausführungsbeispiele der Erfindung werden nachfolgend unter Bezugnahme auf die Zeichnungen näher erläutert. Dabei bezeichnen gleiche Bezugszeichen identische oder einander ähnliche Teile.
- Figur 1: zeigt in perspektivischer Ansicht ein Ausführungsbeispiel einer Wasserkraftanlage.
- Figur 2: zeigt eine Draufsicht auf die Wasserkraftanlage der Figur 1 bei offener Gehäusedeckenwand.
- Figur 3: zeigt in beispielhafter Weise die Anbringung einer Schaufel an dem Laufband sowie einen Führungsmechanismus der Schaufel.
- Figur 4: zeigt eine Schnittansicht entlang Linie A-A in Figur 3.
- Figur 5A: zeigt in beispielhafter Weise zwei mögliche Seitenansichten einer Strömungsanlage zur Erhöhung der Strömungsgeschwindigkeit für die Wasserkraftanlage.
- Figur 5B: zeigt ein Beispiel einer Strömungsanlage in Draufsicht.

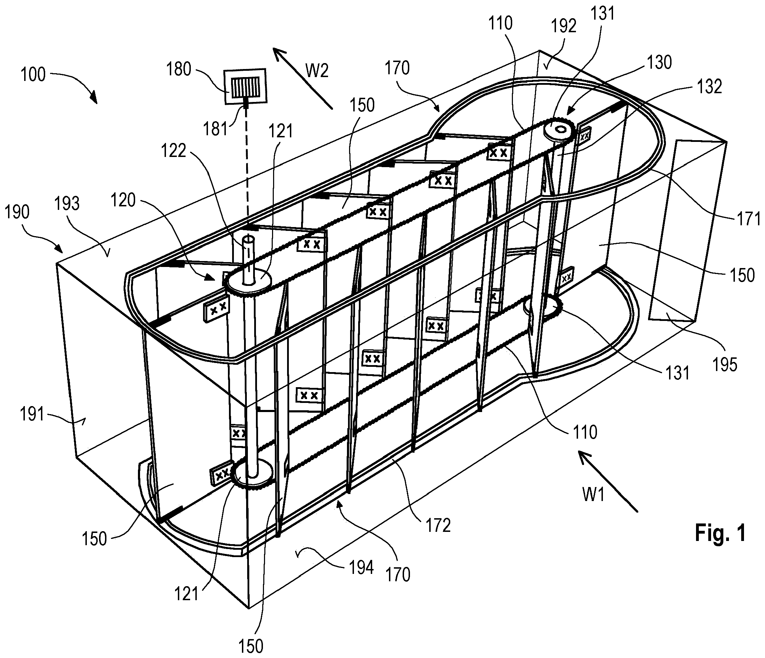

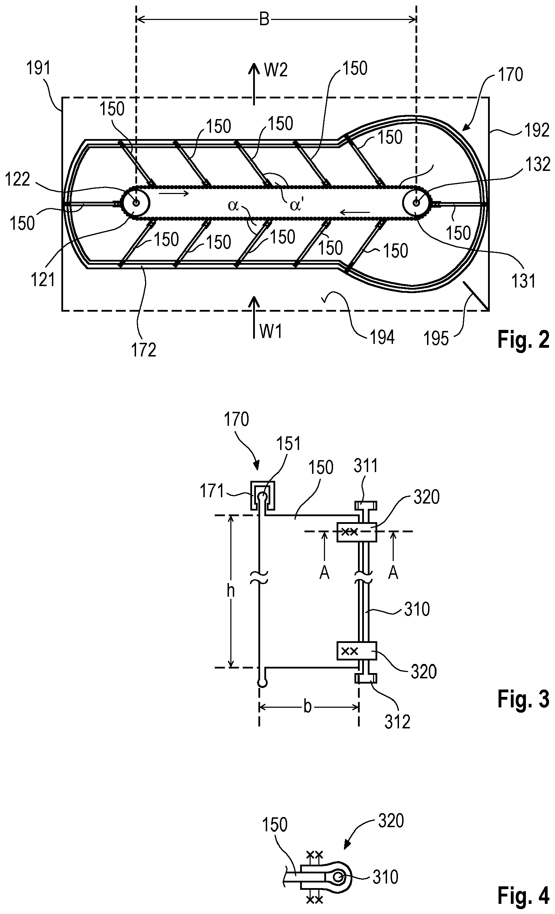

In den Figuren 1 und 2 ist ein Ausführungsbeispiel einer Wasserkraftanlage 100 dargestellt. Die Wasserkraftanlage 100 ist dafür vorgesehen, in eine Wasserströmung eingetaucht zu werden. Der Pfeil W1 zeigt die Richtung der Wasserströmung, die auf die zustromseitige Seite (d.h. an der Strömungseintrittsseite) der Wasserkraftanlage 100 zufließt, während der Pfeil W2 die Wasserströmung zeigt, die die Wasserkraftanlage 100 abstromseitig (d.h. an der Strömungsaustrittsseite) verlässt.

Die (optionale) Spiegelsymmetrie der Anlage macht deutlich, dass die Wasserströmungen W1 und W2 auch entgegengesetzt gerichtet sein können, d.h. in diesem Fall würde der Pfeil bei W2 entgegengesetzt gerichtet sein und die zustromseitige Strömungsrichtung kennzeichnen, während der Pfeil W1 in Gegenrichtung die abstromseitige Strömungsrichtung kennzeichnen würde.

Die Wasserkraftanlage 100 enthält ein endloses Laufband 110, das in dem dargestellten Ausführungsbeispiel beispielsweise in Form von zwei parallel zueinander verlaufenden Ketten 110 realisiert sein kann. Das Laufband (hier z.B. in Form der zwei Ketten 110) wird an zwei Umlenkstellen 120, 130 umgelenkt. Im dargestellten Ausführungsbeispiel ist eine Umlenkung um jeweils 180° dargestellt. Der zustromseitige Abschnitt des Laufbandes und der abstromseitige Abschnitt des Laufbandes können sich somit in zwei gegenläufigen Linearbewegungen bewegen. Die (hier durch die zwei Ketten 110 verlaufende) Laufbandebene ist beispielsweise senkrecht zu der Richtung W1 der Wasserströmung orientiert.

Die Umlenkstellen 120, 130 können beispielsweise durch Kettenräder 121, 131 realisiert sein, um welche jeweils eine Laufkette 110 kraftschlüssig gekoppelt umläuft.

Die Kettenräder 121, 131 der oberen Kette 110 können beispielsweise über eine Welle 122 bzw. 132 mit den jeweiligen unteren Kettenrädern 121 bzw. 131 drehfest gekoppelt sein.

Es wird darauf hingewiesen, dass baulich andere Realisierungsmöglichkeiten bestehen. Beispielsweise können anstelle der Ketten 110 auch Zahnriemen oder dergleichen und anstelle der Kettenräder 121, 131 auch Zahnriemenscheiben verwendet werden.

Die Drehachsen der Wellen 122, 132 erstrecken sich im Wesentlichen in Vertikalrichtung, d.h. im Wesentlichen senkrecht zur Oberfläche der Wasserströmung. Dies unterscheidet die Wasserkraftanlage 100 beispielsweise von Wassermühlen oder Turbinenanlagen, bei welchen die Drehachsen parallel zur Oberfläche der Wasserströmung (Wassermühle) bzw. parallel zur Wasserströmung (Turbinenanlage) orientiert sind.

An dem umlaufenden Laufband sind beispielsweise unter gleichen Abständen Schaufeln 150 angelenkt. Die Anbringung der Schaufeln 150 an dem Laufband (z.B. Kette 110 oder Zahnriemen usw.) erfolgt klappbar, d.h. die Schaufeln 150 können ihre Stellung relativ zu dem Laufband ändern.

Wie in den Figuren 1 und 2 ersichtlich, können die Schaufeln 150 der zustromseitigen Schaufelreihe (bei Pfeil W1) alle unter demselben Winkel α gegenüber dem Laufband in Laufrichtung (siehe Pfeil) orientiert sein, während die Schaufeln 150 auf der abstromseitigen Seite des Laufbandes ebenfalls alle unter demselben Winkel α' gegenüber dem Laufband in Laufrichtung (siehe Pfeil) orientiert sein können. An der Umlenkstelle 120 findet ein Zurückklappen der Schaufeln 150 von dem Winkel α auf den Winkel α' statt, während an der Umlenkstelle 130 ein Vorwärtsklappen der Schaufeln 150 von dem Winkel α' in den Winkel α erfolgt.

Der Winkel α kann beispielsweise etwa 45° betragen, d.h. die Schaufeln 150 der zustromseitigen Schaufelreihe können im Wesentlichen unter 45° gegenüber der Wasserströmung W1 geneigt sein.

Der Winkel α' kann beispielsweise etwa 135° betragen, d.h. es kann ein Umklappen der Schaufeln 150 um beispielsweise etwa 90° an den Umlenkstellen 120 bzw. 130 stattfinden.

Es wird darauf hingewiesen, dass die Winkelangaben α = 45°, α' = 135° lediglich beispielhaft sind und z.B. in einem Bereich von ± 10 % oder ± 20 % oder mehr variiert werden können. Es ist auch nicht erforderlich, dass der Umklappvorgang ein Umklappen um 90° bewerkstelligt, hier können ebenfalls Abweichungen in der Größenordnung von beispielsweise bis zu 10° oder 20° oder mehr vorgesehen sein. Ferner muss auch keine Spiegelsymmetrie in Bezug auf die die Wellen 122, 132 verbindende Linie vorhanden sein. Beispielsweise ist es möglich, dass bei einem Winkel von α = 45° der Winkel α' beispielsweise lediglich 115° oder weniger oder auch nur etwa 90° beträgt.

Die Winkelstellung α der Schaufeln 150 bestimmt den Anstellwinkel zu der zustromseitigen Wasserströmung W1 (die üblicherweise der Wasserströmung des Fließgewässers entspricht) und die Winkelstellung α' der Schaufeln 150 bestimmt den Anstellwinkel zu einer Wasserströmung innerhalb der Wasserkraftanlage 100, die durch die zustromseitige Schaufelreihe 150 vorgegeben wird und auf die abstromseitige Schaufelreihe 150 einwirkt. Beträgt der Winkel α' beispielsweise nur 90° sind die Schaufeln 150 der abstromseitigen Schaufelreihe in Richtung der Wasserströmung W1 ausgerichtet. In diesem Fall sind also nur die Schaufeln 150 der zustromseitigen Schaufelreihe zur Richtung W1 der Wasserströmung geneigt orientiert, während die Schaufeln 150 der abstromseitigen Schaufelreihe parallel zur Wasserströmung W1 gestellt sind und dennoch aufgrund der Schräganströmung zur hydrokinetischen Energiegewinnung beitragen können.

Die Winkelstellung der Schaufeln 150 der zustromseitigen Schaufelreihe sowie die Winkelstellung der Schaufel 150 an der abstromseitigen Schaufelreihe können durch einen Führungsmechanismus 170 vorgegeben werden. Der Führungsmechanismus 170 hält die Schaufeln 150 in eine für die Energieaufnahme günstige oder optimale Stellung zueinander, wodurch die Anlage effektiv auch bei kleinen Fließgeschwindigkeiten arbeitet.

Der Führungsmechanismus 170 kann beispielsweise eine obere umlaufende Führung 171 und/oder eine gegebenenfalls formgleiche untere umlaufende Führung 172 aufweisen. Die obere umlaufende Führung 171 und/oder die untere umlaufende Führung 172 kann beispielsweise in Form einer Kulissenführung oder einer Führungsschiene ausgebildet sein.

Die Schaufeln 150 werden im laufbandfernen Bereich oder unmittelbar an ihrem äußeren Rand von dem Führungsmechanismus 170 geführt werden.

Die Wasserkraftanlage 100 kann in einem Gehäuse 190 untergebracht sein. Das Gehäuse 190 kann zwei gegenüberliegende Seitenwände 191, 192 sowie eine Deckenwand 193 und eine Bodenwand 194 aufweisen. An der Seitenwand 192 kann eine in den Strömungsbereich vorstehende Strömungsblende 195 in Form einer Einlassverkleinerung vorgesehen sein, die den Umklappvorgang der Schaufeln 150 im Bereich der Umlenkstelle 130 erleichtert. Der Führungsmechanismus 170 (d.h. beispielsweise die obere und/oder untere Kulissenführung oder Führungsschiene 171, 172) kann an der Deckenwand 193 und/oder der Bodenwand 194 angebracht sein.

Um die Vor- bzw. Rückklappbewegungen der Schaufeln 150 an den Umlenkstellen 130 bzw. 120 zu gewährleisten, ist der Führungsmechanismus 170 im Bereich der Umlenkstelle 120 beispielsweise in Form eines teilkreisförmigen Segments geformt, während der Führungsmechanismus 170 im Bereich der Umlenkstelle 130 sich beispielsweise aus einem Einlauf-Kreissegment, in welchem der Schaufelwinkel von α' auf 90° gestellt wird, aus einem 180°-Kreissegment und aus einem Auslauf-Kreissegment, das spiegelbildlich zu dem Einlauf-Kreissegment ist und in welchem der Schaufelwinkel auf α gestellt wird, zusammensetzt. Dabei können die Einlauf- und Auslauf-Kreissegmente einen identischen Radius aufweisen, der größer als der Radius des 180°-Kreissegmentes ist.

Figur 3 zeigt beispielhaft eine Schaufel 150 der Höhe h und der Breite b. Die Schaufel 150 kann an einer Seite rotierbar an einer Stange 310 angebracht sein. Beispielsweise kann die Anbringung über zwei Klappscharniere 320 erfolgen, siehe auch Figur 4. Die Stange 310 kann Teil des Laufbandes sein, d.h. sie kann beispielsweise an ihren oberen und unteren Enden 311, 312 fest mit der oberen bzw. unteren Kette 110 verbunden sein. Es ist auch möglich, dass die Schaufeln 150 nicht an ihrer einen Seite, sondern in einem vom Rand beabstandeten Bereich, beispielsweise in ihrem mittleren Bereich, an dem Laufband angebracht sind.

Der Führungsmechanismus 170 ist in dem in Figur 3 dargestellten Beispiel als Schienenführung ausgebildet. In diesem Fall kann die obere Führungsschiene 171 beispielsweise als Hohlprofil (z.B. Käfigschienenführung) realisiert sein, in welches ein Führungsteil 151 der Schaufel 150 einsteht.

Beispielhafte Abmessungen der Wasserkraftanlage 100 sind b = 400 mm, h = 1000 mm, und B (Abstand zwischen den Wellen 122, 132) = 2000 mm. Beträgt der Radius der Kettenräder beispielsweise 100 mm ergibt sich eine Kettenlänge von z.B. 4628 mm. Die Schaufelanzahl n kann so gewählt werden, dass die projizierte Fläche quer zur Strömung gleich der Frontalfläche der gesamten Anlage 100 ist. Bei dem genannten Dimensionierungsbeispiel ergibt sich in diesem Fall eine Schaufelpaaranzahl n = 11 (d.h. 2 Schaufeln 150 in den Umklappbereichen und jeweils 10 Schaufeln 150 in der zustromseitigen und abstromseitigen Schaufelreihe).

Ein Generator 180 (in den Figuren lediglich schematisch dargestellt) kann innerhalb oder außerhalb des Gehäuses 190 untergebracht sein und eine Rotorwelle 181 aufweisen, die beispielsweise mit einer Welle 122, 132 einer Umlenkstelle 120 bzw. 130 drehgekoppelt ist. Selbstverständlich kann die Wasserkraftanlage 100 auch Generatoren an beiden Umlenkstellen 120, 130 oder an anderer Stelle aufweisen.

Das Gehäuse 190 kann aus Metall oder aus einem Kunststoff bestehen. Die Gehäusewanddicken können beispielsweise 1 cm oder mehr betragen.

Es ist eine Vielzahl von Abwandlungen der beschriebenen Ausführungsbeispiele möglich. Beispielsweise kann der Führungsmechanismus 170 nicht umlaufend, sondern beispielsweise nur im Bereich der Umlenkstellen 120, 130 vorgesehen sein. Die unterschiedlichen Schaufelstellungen der beiden Schaufelreihen können in diesem Fall beispielsweise durch einen Verrastung im Bereich der Schaufelanlenkung (z.B. an den Klappscharnieren 320) herbeigeführt werden, die an den Umlenkstellen 120, 130 selbsttätig gelöst und nach dem Klappvorgang wieder in Eingriff gebracht wird. Z.B. kann an jeder Schaufelanlenkung ein Rastanker vorgesehen sein, der eingangs der Umlenkstellen 120, 130 aus einer ersten Verrastung angehoben und nach dem Umklappvorgang ausgangs der Umlenkstellen 120, 130 wieder in eine zweite (andere) Verrastung abgesenkt wird. Auch bei einem umlaufenden Führungsmechanismus 170 kann ein solcher Rastmechanismus oder mitlaufender Anschlag vorgesehen sein. Es ist auch möglich, an den Umlenkstellen 120, 130 (oder auch gänzlich) auf einen Führungsmechanismus 170 zu verzichten und die Umklappvorgänge in anderer Weise, z.B. durch einen schneller als die Welle 132 drehenden Schaufelmitnehmer im Bereich der Umlenkstelle 130 und/oder einen langsamer als die Welle 122 drehenden Schaufelrücksteller im Bereich der Umlenkstelle 120 zu realisieren.

Die Wasserkraftanlage 100 ermöglicht die Erzeugung von elektrischem Strom aus Fließgewässern mit kleinen Fließgeschwindigkeiten. Die Anlage 100 ist in Breite und Höhe frei dimensionierbar und somit optimal an unterschiedlichste Einsatzumgebungen anpassbar. Durch die kleinen Umlaufgeschwindigkeiten der Bauteile (Schaufeln 150) wird das Fischleben im Fließgewässer nicht beeinflusst und der Eingriff in die Natur minimal gehalten. Die Anlage erfordert keine Schwimmkörper und ist unanfällig gegen Oberflächentreibgut, da sie nicht über die Wasseroberfläche hinausragen muss. Durch ein Gitter im Zustrombereich der Wasserkraftanlage 100 kann darüber hinaus ein Schutz vor Tieftreibgut sowie auch ein Schutz für Flusstiere vorgesehen sein. Ein weiterer Vorzug der Anlage 100 besteht darin, dass ein Aufstauen des Gewässers nicht erforderlich ist. Darüber hinaus kann die Anlage 100 für richtungswechselnde Strömungen, z.B. Gezeiten, ausgelegt sein.

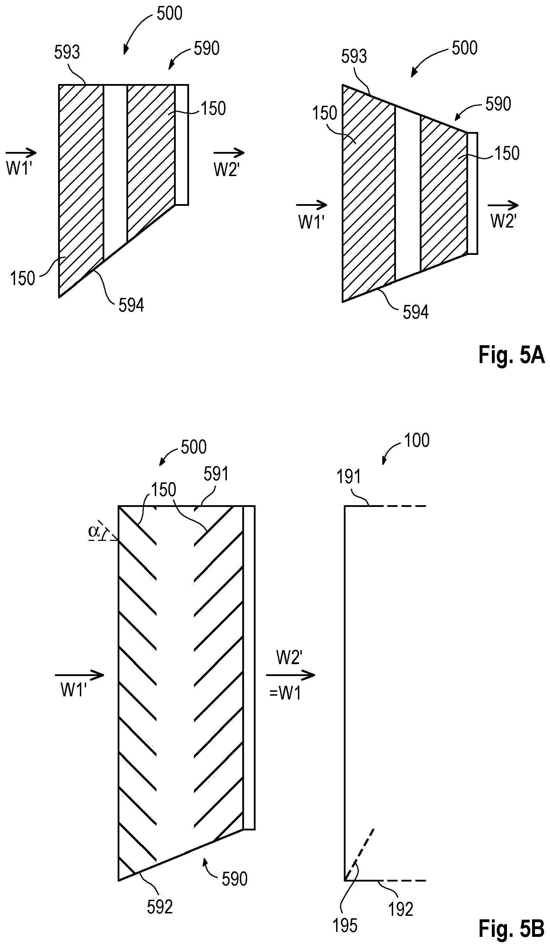

Beschrieben wird ferner eine Strömungsanlage 500, siehe Figuren 5A und 5B. Diese kann beispielsweise der Wasserkraftanlage 100 (oder auch einer anderen Wasserkraftanlage) vorschaltbar sein und zur Erhöhung der Eintrittsgeschwindigkeit der Wasserströmung W1 in z.B. die Wasserkraftanlage 100 vorgesehen sein.

Die Strömungsanlage 500 kann identisch wie die Wasserkraftanlage 100 aufgebaut sein, jedoch weist sie ortsfeste (d.h. blockierte bzw. nicht umlaufende) Schaufeln 150 auf, siehe die Draufsicht in Figur 5B (bei entfernter Gehäusedeckenwand) . Insofern benötigt die Strömungsanlage 500 kein Laufband, keine Umlenkstellen und auch keinen Führungsmechanismus. Die Schaufeln 150 der beiden Schaufelreihen können beispielsweise fest an der Deckenwand 593 (entspricht der Deckenwand 193) und der Bodenwand 594 (entsprich der Bodenwand 194) des Gehäuses 590 (entspricht dem Gehäuse 190) verankert sein.

Insofern umfasst die Strömungsanlage 500 eine zustromseitige Reihe erster Schaufeln 150 und eine abstromseitige Reihe zweiter Schaufeln 150, wobei die Schaufeln 150 wenigstens einer der beiden Schaufelreihen (insbesondere beider Schaufelreihen) zur Richtung der Wasserströmung geneigt orientiert sind, siehe Figur 5B. Die Schaufeln 150 der zustromseitige Reihe erster Schaufeln bzw. die Schaufeln 150 der abstromseitigen Reihe zweiter Schaufeln können jeweils parallel zueinander verlaufen, siehe die Figuren 1 und 2. Zu weiteren Merkmalen der Strömungsanlage 500, insbesondere in Hinblick auf die Stellungen der Schaufeln 150 und die Dimensionierung der Anlage usw., wird zur Vermeidung von Wiederholungen auf die obige Beschreibung verwiesen.

Durch die zweimalige Umlenkung der Wasserströmung wird der hydrostatische Druck in der Strömungsanlage 500 erhöht, so dass die Austrittsgeschwindigkeit unter Berücksichtigung der Bernoulli-Gleichung - infolge der Laufwegsverlängerung der Strömung in der Strömungsanlage 500 gegenüber der Strömung außerhalb der Strömungsanlage 500 - beispielsweise verdoppelt (Geschwindigkeit(W2') = 1,96 Geschwindigkeit (W1')) wird.

Ferner kann der Querschnitt des Strömungsstrahles der Strömungsanlage 500 beim Austritt beispielsweise zweimal kleiner als der Querschnitt des Strömungsstrahles beim Eintritt sein. Dieser Austrittsströmungsstrahl W2` ist der Eintrittsströmungsstrahl W1 für die angehängte stromproduzierende Anlage (d.h. die Wasserkraftanlage 100). Um Wirbelverluste zu vermindern, reduziert man diesen Eintrittsquerschnitt also beispielsweise um die Hälfte, wie dies in den Figuren 5A (jeweils z.B. Reduzierung der Eintrittshöhe von 1770 mm auf eine Austrittshöhe von 1000 mm) und 5B (z.B. Reduzierung der Eintrittsbreite von 3060 mm auf eine Austrittsbreite von 2660 mm) beispielshaft dargestellt ist. Durch die (um z.B. 400 mm) reduzierte Austrittsbreite der Strömungsanlage 500 kann erreicht werden, dass die in den Strömungsbereich vorstehende Strömungsblende 195 (Einlassverkleinerung) der Wasserkraftanlage 100 nicht angeströmt wird (die Wasserkraftanlage 100 hat z.B. dieselben Gehäuse-Querschnittsabmessungen (Höhe: 1770 mm, Breite: 3060 mm) wie der Eintrittsquerschnitt der Strömungsanlage 500).

Es kann also eine Verdoppelung (oder allgemein Erhöhung) der Austrittsgeschwindigkeit aus der Strömungsanlage 500 durch eine entsprechende Verkleinerung des Austrittsquerschnitts der Strömungsanlage 500 (Kontinuitätsgleichung) erreicht werden, siehe z.B. die beiden Ausführungsbeispiele der Figur 5A, in welchen die Deckenwand 593 und/oder die Bodenwand 594 des Gehäuses 590 geneigt sind, um den Strömungsquerschnitt beim Durchfließen zu verengen. Ferner können sich auch eine oder beide Seitenwände 591 (entspricht Seitenwand 191 der Wasserkraftanlage 100) bzw. 592 (entspricht Seitenwand 192 der Wasserkraftanlage 100) verengen. Dadurch kann die Austrittsgeschwindigkeit aufgrund der Bernoulli- und der Kontinuitätsgleichung beispielsweise bis auf das 3,8-fache erhöht werden. Bei dieser Bauweise kann die Anlage schon bei Fließgeschwindigkeiten ab 0,5 m/s und demnach an sehr vielen Flussorten und insbesondere an vielen Orten mit kleinen Strömungsgeschwindigkeiten (beispielsweise Gezeitenströmungen) effektiv eingesetzt werden

Die Strömungsanlage 500 kann bei Bedarf und/oder bei Platzmangel und/oder bei sehr kleinen Fließgeschwindigkeiten der Wasserkraftanlage 100 vorangestellt werden, um deren Wirkungsgrad zu erhöhen. Sie ermöglicht eine Erhöhung und insbesondere Vervielfachung der Anströmgeschwindigkeit für die Wasserkraftanlage 100 und vergrößert damit auch den Einsatzbereich der Wasserkraftanlage 100 in Bezug auf ökologische Verträglichkeit, Fließgewässerformen und -arten sowie andere Aspekte.

## Patentansprüche

1. Wasserkraftanlage zur Nutzung einer Wasserströmung, die aufweist:
ein endloses Laufband, an welchem eine Vielzahl von Schaufeln (150) umklappbar an ihrem inneren Rand angebracht ist,
mindestens zwei Umlenkstellen (120, 130), um die das Laufband geführt ist, derart, dass zwei sich im Betrieb gegenläufig bewegende Schaufelreihen vorhanden sind, wobei die Schaufeln (150) wenigstens einer der beiden Schaufelreihen zur Richtung der Wasserströmung (W1) geneigt orientiert sind, und wobei an den Umlenkstellen (120, 130) ein Umklappen der Schaufeln (150) von einer ersten Schaufelstellung in eine zweite Schaufelstellung bzw. von der zweiten Schaufelstellung zurück in die erste Schaufelstellung erfolgt, und
einen Führungsmechanismus (170) in Form einer geschlossenen umlaufenden Führung, der die Schaufeln (150) an ihrem äußeren Rand führt, wobei das Umklappen der Schaufeln (150) an den Umlenkstellen (120, 130) durch den Führungsmechanismus (170) bewerkstelligt wird.

2. Wasserkraftanlage nach Anspruch 1, wobei der Führungsmechanismus (170) benachbart einer ersten Umlenkstelle ein Zurückklappen der Schaufeln (150) entgegen der Laufrichtung des Laufbandes bewirkt und der Führungsmechanismus (170) benachbart einer zweiten Umlenkstelle ein Vorklappen der Schaufeln (150) in Laufrichtung des Laufbandes bewirkt.

3. Wasserkraftanlage nach einem der Ansprüche 1 oder 2, wobei der Führungsmechanismus (170) in Form einer Kulissenführung oder einer Führungsschiene ausgebildet ist.

4. Wasserkraftanlage nach einem der vorhergehenden Ansprüche, wobei die Schaufeln (150) der zustromseitigen Schaufelreihe in einem Anstellwinkel von etwa 45° zur Wasserströmung (W1) orientiert sind und/oder die Schaufeln (150) der abstromseitigen Schaufelreihe in einem Winkel von etwa 90° gegenüber den Schaufeln (150) der zustromseitigen Schaufelreihe orientiert sind.

5. Wasserkraftanlage nach einem der vorhergehenden Ansprüche, wobei die Schaufeln (150) plattenförmig oder gekrümmt, insbesondere halbzylinderförmig ausgebildet sind.

6. Wasserkraftanlage nach einem der vorhergehenden Ansprüche, wobei das Laufband wenigstens zwei umlaufende Ketten (110) aufweist, welche um Kettenräder (121, 131) an den Umlenkstellen (120, 130) umgelenkt werden.

7. Wasserkraftanlage nach einem der vorhergehenden Ansprüche, ferner aufweisend:
einen Generator (180) zur Stromerzeugung, der von einer Bewegung des Laufbands angetrieben wird.

8. Wasserkraftanlage nach Anspruch 7, wobei eine Rotorwelle (181) des Generators (180) mit einer Welle einer Umlenkstelle drehgekoppelt ist.

9. Wasserkraftanlage nach einem der vorhergehenden Ansprüche, die spiegelsymmetrisch aufgebaut ist und dadurch für richtungswechselnde Strömungen ausgelegt ist.

10. Wasserkraftanlage zur Nutzung einer Wasserströmung, die aufweist:
ein endloses Laufband, an welchem eine Vielzahl von Schaufeln (150) umklappbar angebracht ist,
mindestens zwei Umlenkstellen (120, 130), um die das Laufband geführt ist, derart, dass zwei sich im Betrieb gegenläufig bewegende Schaufelreihen vorhanden sind, wobei die Schaufeln (150) wenigstens einer der beiden Schaufelreihen zur Richtung der Wasserströmung (W1) geneigt orientiert sind, und wobei an den Umlenkstellen (120, 130) ein Umklappen der Schaufeln (150) von einer ersten Schaufelstellung in eine zweite Schaufelstellung bzw. von der zweiten Schaufelstellung zurück in die erste Schaufelstellung erfolgt, und
einen Führungsmechanismus (170) in Form einer einzigen umlaufenden Führung, die geschlossenen ist und die Schaufeln (150) an ihrem äußeren laufbandfernen Bereich, insbesondere äußeren Rand führt, wobei das Umklappen der Schaufeln (150) an den Umlenkstellen (120, 130) durch die geschlossene umlaufende Führung bewerkstelligt wird.

11. Wasserkraftanlage nach Anspruch 10, wobei die geschlossene umlaufende Führung eine Geometrie aufweist die bewirkt, dass die Schaufeln (150) selbsttätig - d.h. ohne zusätzliche Betätigung allein durch ihre vom Laufband bestimmte Bewegung - an den Umlenkstellen (120, 130) umgeklappt werden.

12. Wasserkraftanlage nach Anspruch 10 oder 11, wobei die geschlossene umlaufende Führung im Bereich einer der Umlenkstellen (120, 130) aus einem Einlauf-Kreissegment, in welchem der Schaufelwinkel der abstromseitigen Schaufelreihe auf 90° gegenüber dem Laufband in Laufrichtung gestellt wird, aus einem 180°-Kreissegment und aus einem Auslauf-Kreissegment, in welchem der Schaufelwinkel auf den Schaufelwinkel der zustromseitigen Schaufelreihe gestellt wird, zusammensetzt.

13. Wasserkraftanlage nach einem der Ansprüche 10 bis 12, wobei die einzige umlaufende Führung eine obere umlaufende Kulissenführung oder Führungsschiene und eine formgleiche untere umlaufende Kulissenführung oder Führungsschiene aufweist.

14. Verfahren zur Erzeugung einer Rotationsbewegung aus einer Wasserströmung, umfassend:
Anströmen eines endlosen Laufbands, an welchem eine Vielzahl von Schaufeln (150) umklappbar an ihrem inneren Rand angebracht ist, von der Wasserströmung (W1), wobei
das Laufband um mindestens zwei Umlenkstellen (120, 130) geführt ist, derart, dass sich eine zustromseitige Schaufelreihe in eine quer zur Wasserströmung (W1) verlaufende Richtung bewegt und sich eine abstromseitige Schaufelreihe gegenläufig zur zustromseitigen Schaufelreihe bewegt, wobei
die Schaufeln (150) wenigstens einer der beiden Schaufelreihen zur Richtung der Wasserströmung (W1) geneigt orientiert sind und an den Umlenkstellen (120, 130) ein Umklappen der Schaufeln (150) von einer ersten Schaufelstellung in eine zweite Schaufelstellung bzw. von der zweiten Schaufelstellung zurück in die erste Schaufelstellung erfolgt, wobei das Umklappen der Schaufeln (150) an den Umlenkstellen (120, 130) durch eine Führung der Schaufeln (150) an ihrem äußeren Rand durch einen Führungsmechanismus (170) in Form einer geschlossenen umlaufenden Führung bewerkstelligt wird; und
Umsetzen der Laufbandbewegung in eine Rotationsbewegung.

15. Verfahren zur Erzeugung einer Rotationsbewegung aus einer Wasserströmung, umfassend:
Anströmen eines endlosen Laufbands, an welchem eine Vielzahl von Schaufeln (150) umklappbar angebracht ist, von der Wasserströmung (W1), wobei
das Laufband um mindestens zwei Umlenkstellen (120, 130) geführt ist, derart, dass sich eine zustromseitige Schaufelreihe in eine quer zur Wasserströmung (W1) verlaufende Richtung bewegt und sich eine abstromseitige Schaufelreihe gegenläufig zur zustromseitigen Schaufelreihe bewegt, wobei
die Schaufeln (150) wenigstens einer der beiden Schaufelreihen zur Richtung der Wasserströmung (W1) geneigt orientiert sind und an den Umlenkstellen (120, 130) ein Umklappen der Schaufeln (150) von einer ersten Schaufelstellung in eine zweite Schaufelstellung bzw. von der zweiten Schaufelstellung zurück in die erste Schaufelstellung erfolgt, wobei das Umklappen der Schaufeln (150) an den Umlenkstellen (120, 130) durch einen Führungsmechanismus (170) in Form einer einzigen umlaufenden Führung bewerkstelligt wird, die geschlossenen ist und die Schaufeln (150) an ihrem äußeren laufbandfernen Bereich, insbesondere äußeren Rand führt; und
Umsetzen der Laufbandbewegung in eine Rotationsbewegung.

## Claims

1. Hydropower plant for the use of a water flow, which comprises:
an endless moving belt on which a plurality of blades (150) is foldably mounted at their inner edge,
at least two deflection points (120, 130), around which the moving belt is guided, such that two rows of blades moving in opposite directions during operation are provided, the blades (150) of at least one of the two rows of blades being oriented inclined to the direction of the water flow (W1), and the blades (150) being folded over at the deflection points (120, 130) from a first blade position into a second blade position or from the second blade position back into the first blade position, and
a guide mechanism (170) in the form of a closed circumferential guide which guides the blades (150) at their outer edge, the folding over of the blades (150) at the deflection points (120, 130) being effected by the guide mechanism (170).

2. Hydropower plant according to claim 1, wherein the guide mechanism (170) adjacent to a first deflection point causes the blades (150) to fold back against the running direction of the moving belt and the guide mechanism (170) adjacent to a second deflection point causes the blades (150) to fold forward in the running direction of the moving belt.

3. Hydropower plant according to one of claims 1 or 2, wherein the guide mechanism (170) is in the form of a connecting-link guide or a guide rail.

4. Hydropower plant according to one of the preceding claims, wherein the blades (150) of the upstream row of blades are oriented at an angle of attack of about 45° to the water flow (W1) and/or the blades (150) of the downstream row of blades are oriented at an angle of about 90° with respect to the blades (150) of the upstream row of blades.

5. Hydropower plant according to one of the preceding claims, wherein the blades (150) are plate-shaped or curved, in particular semi-cylindrical.

6. Hydropower plant according to one of the preceding claims, wherein the moving belt has at least two circulating chains (110) which are deflected around chain wheels (121, 131) at the deflection points (120, 130).

7. Hydropower plant according to any one of the preceding claims, further comprising:
a generator (180) to produce electricity, which is driven by a movement of the moving belt.

8. Hydropower plant according to claim 7, wherein a rotor shaft (181) of the generator (180) is rotationally coupled to a shaft of a deflection point.

9. Hydropower plant according to one of the preceding claims, which is of mirror-symmetrical design and is thereby configured for directionally changing flows.

10. Hydropower plant for the use of a water flow, comprising:
an endless moving belt on which a plurality of blades (150) is foldably mounted,
at least two deflection points (120, 130), around which the moving belt is guided, such that two rows of blades moving in opposite directions during operation are provided, the blades (150) of at least one of the two rows of blades being oriented inclined to the direction of the water flow (W1), and the blades (150) being folded over at the deflection points (120, 130) from a first blade position into a second blade position or from the second blade position back into the first blade position, and
a guide mechanism (170) in the form of a single circumferential guide which is closed and guides the blades (150) at their outer region remote from the moving belt, in particular the outer edge, the folding over of the blades (150) at the deflection points (120, 130) being effected by the closed circumferential guide.

11. Hydropower plant according to claim 10, wherein the closed circumferential guide has a geometry which causes the blades (150) to be folded over automatically - i.e. without additional actuation solely by their movement determined by the moving belt - at the deflection points (120, 130).

12. Hydropower plant according to claim 10 or 11, wherein the closed circumferential guide in the region of one of the deflection points (120, 130) is composed of an inlet circular segment, in which the blade angle of the row of blades on the outflow side is set to 90° relative to the moving belt in the running direction, of a 180° circular segment and of an outlet circular segment in which the blade angle is set to the blade angle of the row of blades on the inflow side.

13. Hydropower plant according to any one of claims 10 to 12, wherein the single circumferential guide comprises an upper circumferential connecting-link guide or guide rail and a lower circumferential connecting-link or guide rail of the same shape.

14. Method of generating a rotational motion from a water flow, comprising:
flowing water of the water flow (W1) onto an endless moving belt on which a plurality of blades (150) is foldably mounted at their inner edge, wherein
the moving belt is guided around at least two deflection points (120, 130) in such a way that a row of blades on the upstream side moves in a direction transverse to the water flow (W1) and a row of blades on the downstream side moves in the opposite direction to the row of blades on the upstream side, wherein
the blades (150) of at least one of the two rows of blades are oriented inclined to the direction of the water flow (W1) and at the deflection points (120, 130) the blades (150) are folded over from a first blade position into a second blade position or, respectively from the second blade position back into the first blade position, wherein the folding over of the blades (150) at the deflection points (120, 130) is effected by guiding the blades (150) at their outer edge by a guide mechanism (170) in the form of a closed circumferential guide; and
converting the moving belt movement into a rotational movement.

15. Method of generating a rotational motion from a water flow, comprising:
flowing water of the water flow (W1) onto an endless moving belt on which a plurality of blades (150) is foldably mounted, wherein
the moving belt is guided around at least two deflection points (120, 130) in such a way that a row of blades on the upstream side moves in a direction transverse to the water flow (W1) and a row of blades on the downstream side moves in the opposite direction to the row of blades on the upstream side, wherein
the blades (150) of at least one of the two rows of blades are oriented inclined to the direction of the water flow (W1) and at the deflection points (120, 130) the blades (150) are folded over from a first blade position into a second blade position or, respectively from the second blade position back into the first blade position, wherein the folding over of the blades (150) at the deflection points (120, 130) is effected by a guide mechanism (170) in the form of a single circumferential guide which is closed and guides the blades (150) at their outer region remote from the moving belt, in particular outer edge; and
converting the moving belt movement into a rotational movement.

## Revendications

1. Centrale hydroélectrique permettant d'exploiter un courant d'eau, présentant :
une bande de roulement sans fin sur laquelle une pluralité d'aubes (150) est montée de manière rabattable au niveau du bord intérieur de celles-ci,
au moins deux emplacements de renvoi (120, 130) autour desquels la bande de roulement est guidée de telle sorte qu'il existe deux rangées d'aubes qui se déplacent en sens opposé en cours de fonctionnement, dans laquelle les aubes (150) d'au moins l'une des deux rangées d'aubes sont orientées de manière inclinée par rapport au sens du courant d'eau (W1), et dans laquelle, aux emplacements de renvoi (120, 130), un rabattement des aubes (150) d'une première position d'aube dans une deuxième position d'aube ou à nouveau de la deuxième position d'aube dans la première position d'aube est effectué, et
un mécanisme de guidage (170) sous la forme d'un guide tournant fermé qui guide les aubes (150) au niveau de leur bord extérieur, dans laquelle le rabattement des aubes (150) aux emplacements de renvoi (120, 130) est réalisé par le mécanisme de guidage (170) .

2. Centrale hydroélectrique selon la revendication 1, dans laquelle le mécanisme de guidage (170) provoque de manière adjacente à un premier emplacement de renvoi un rabattement vers l'arrière des aubes (150) à l'opposé du sens de la marche de la bande de roulement, et le mécanisme de guidage (170) provoque de manière adjacente à un deuxième emplacement de renvoi un rabattement vers l'avant des aubes (150) dans le sens de la marche de la bande de roulement.

3. Centrale hydroélectrique selon l'une quelconque des revendications 1 ou 2, dans laquelle le mécanisme de guidage (170) est réalisé sous forme de guide de coulisse ou de rail de guidage.

4. Centrale hydroélectrique selon l'une quelconque des revendications précédentes, dans laquelle les aubes (150) de la rangée d'aubes côté arrivée sont orientées selon un angle d'attaque d'environ 45° par rapport au courant d'eau (W1), et/ou les aubes (150) de la rangée d'aubes côté évacuation sont orientées selon un angle d'environ 90° par rapport aux aubes (150) de la rangée d'aubes côté arrivée.

5. Centrale hydroélectrique selon l'une quelconque des revendications précédentes, dans laquelle les aubes (150) sont réalisées en forme de plaque ou de manière courbe, en particulier en forme de demi-cylindre.

6. Centrale hydroélectrique selon l'une quelconque des revendications précédentes, dans laquelle la bande de roulement présente au moins deux chaînes tournantes (110) qui sont renvoyées autour de roues dentées à chaîne (121, 131) au niveau des emplacements de renvoi (120, 130).

7. Centrale hydroélectrique selon l'une quelconque des revendications précédentes, présentant en outre :
un générateur (180) pour générer de l'électricité qui est entraîné par un mouvement de la bande de roulement.

8. Centrale hydroélectrique selon la revendication 7, dans laquelle un arbre de rotor (181) du générateur (180) est couplé en rotation avec un arbre d'un emplacement de renvoi.

9. Centrale hydroélectrique selon l'une quelconque des revendications précédentes, qui est construite en symétrie spéculaire et donc conçue pour des courants qui changent de sens.

10. Centrale hydroélectrique permettant d'exploiter un courant d'eau, présentant :
une bande de roulement sans fin sur laquelle une pluralité d'aubes (150) est montée de manière rabattable,
au moins deux emplacements de renvoi (120, 130) autour desquels la bande de roulement est guidée de telle sorte qu'il existe deux rangées d'aubes qui se déplacent en sens opposé en cours de fonctionnement, dans laquelle les aubes (150) d'au moins l'une des deux rangées d'aubes sont orientées de manière inclinée par rapport au sens du courant d'eau (W1), et dans laquelle, aux emplacements de renvoi (120, 130), un rabattement des aubes (150) d'une première position d'aube dans une deuxième position d'aube ou à nouveau de la deuxième position d'aube dans la première position d'aube est effectué, et
un mécanisme de guidage (170) sous la forme d'un seul guide tournant qui est fermé guide les aubes (150) au niveau de leur zone extérieure, éloignée de la bande de roulement, en particulier de leur bord extérieur, dans laquelle le rabattement des aubes (150) aux emplacements de renvoi (120, 130) est réalisé par le guide tournant fermé.

11. Centrale hydroélectrique selon la revendication 10, dans laquelle le guide tournant fermé présente une géométrie qui fait que les aubes (150) se rabattent automatiquement - c'est-à-dire sans actionnement supplémentaire uniquement par leur mouvement déterminé par la bande de roulement - au niveau des emplacements de renvoi (120, 130).

12. Centrale hydroélectrique selon la revendication 10 ou 11, dans laquelle le guide tournant fermé est composé dans la zone d'un des emplacements de renvoi (120, 130) d'un segment de cercle d'entrée dans lequel l'angle d'aube de la rangée d'aubes côté évacuation est réglé sur 90° par rapport à la bande de roulement dans le sens de la marche, d'un segment de cercle de 180° et d'un segment de cercle d'écoulement dans lequel l'angle d'aube est réglé sur l'angle d'aube de la rangée d'aubes côté arrivée.

13. Centrale hydroélectrique selon l'une quelconque des revendications 10 à 12, dans laquelle l'unique guide tournant présente un guide de coulisse ou rail de guidage tournant supérieur et un guide de coulisse ou rail de guidage tournant inférieur de forme identique.

14. Procédé permettant de générer un mouvement de rotation à partir d'un courant d'eau, comprenant les étapes consistant à :
diriger le courant d'eau (W1) sur une bande de roulement sans fin sur laquelle une pluralité d'aubes (150) est montée de manière rabattable au niveau du bord intérieur de celles-ci, dans lequel
la bande de roulement est guidée autour d'au moins deux emplacements de renvoi (120, 130) de telle sorte qu'une rangée d'aubes côté arrivée se déplace dans un sens s'étendant transversalement au courant d'eau (W1), et une rangée d'aubes côté évacuation se déplace en sens opposé à la rangée d'aubes côté arrivée, dans lequel
les aubes (150) d'au moins l'une des deux rangées d'aubes sont orientées de manière inclinée par rapport au sens du courant d'eau (W1), et aux emplacements de renvoi (120, 130), un rabattement des aubes (150) d'une première position d'aube dans une deuxième position d'aube ou à nouveau de la deuxième position d'aube dans la première position d'aube est effectué, dans lequel le rabattement des aubes (150) aux emplacements de renvoi (120, 130) est réalisé par un guidage des aubes (150) au niveau de leur bord extérieur par un mécanisme de guidage (170) sous forme de guide tournant fermé ; et
convertir le mouvement de bande de roulement en un mouvement de rotation.

15. Procédé permettant de générer un mouvement de rotation à partir d'un courant d'eau, comprenant les étapes consistant à :
diriger le courant d'eau (W1) sur une bande de roulement sans fin sur laquelle une pluralité d'aubes (150) est montée de manière rabattable, dans lequel
la bande de roulement est guidée autour d'au moins deux emplacements de renvoi (120, 130) de telle sorte qu'une rangée d'aubes côté arrivée se déplace dans un sens s'étendant transversalement au courant d'eau (W1), et une rangée d'aubes côté évacuation se déplace en sens opposé à la rangée d'aubes côté arrivée, dans lequel
les aubes (150) d'au moins l'une des deux rangées d'aubes sont orientées de manière inclinée par rapport au sens du courant d'eau (W1), et aux emplacements de renvoi (120, 130), un rabattement des aubes (150) d'une première position d'aube dans une deuxième position d'aube ou à nouveau de la deuxième position d'aube dans la première position d'aube est effectué, dans lequel le rabattement des aubes (150) aux emplacements de renvoi (120, 130) est réalisé par un mécanisme de guidage (170) sous forme d'un seul guide tournant qui est fermé et guide les aubes (150) au niveau de leur zone extérieure, éloignée de la bande de roulement, en particulier de leur bord extérieur ; et
convertir le mouvement de bande de roulement en un mouvement de rotation.
